# EUROPEAN PATENT APPLICATION

(11) **EP 1 908 731 A1**
(43) Date of publication of application: **09.04.2008**
(21) Application number: 06746431.3
(22) Date of filing: 16.05.2006
(51) Int. Cl.: C01G 23/047, A01N 25/04, A01N 59/16, B01J 21/06, B01J 35/02, B01J 37/34

(54) **HIGHLY DISPERSIBLE TITANIUM DIOXIDE POWDER**

(30) Priority: 21.07.2005 JP 2005211486
(71) Applicant: Sarutashiki Nousan Limited Company, Yoshinogari-cho Kanzaki-gun Saga 8420103 (JP)
(72) Inventor: SHIKI, Kazuhiro, Saga 8420103 (JP)
(74) Representative: Woods, Geoffrey Corlett
(86) International application number: PCT/JP2006/309717
(87) International publication number: WO 2007/010665

(57) **Abstract**

Provided is a means for controlling a plant disease or a pest insect by utilizing a highly dispersible titanium dioxide powder produced by a discharge treatment of a titanium dioxide powder. Titanium dioxide is a substance which is highly safe to living organisms and the environment. A plant disease or a pest insect can be controlled by utilising the substance without adversely affecting the environment.

## Description

### Field of the Invention

The present invention relates to a titanium dioxide powder having high dispersibility. The titanium dioxide powder is useful as a plant disease control agent for agricultural or horticultural use or a pest insect control agent for agricultural or horticultural use.

### Background Art

Titanium dioxide is a tasteless and odorless white powdery substance and has been used as a white-coloring agent for white chocolate or the like. The primary characteristic of the substance is its photocatalytic function. When titanium dioxide is irradiated with light, a substance having a strong oxidative activity such as an OH radical is produced. With this oxidative activity, titanium dioxide can degrade a harmful substance or can exert a bactericidal activity or the like.

With focusing attention on the bactericidal activity of titanium oxide, it has been attempted to utilize the substance as a plant disease control agent (Patent Reference No.1). As demonstrated by the fact that titanium dioxide has been used as a coloring agent for foods, the substance is highly safe to living organisms and the environment. Therefore, it is expected that plant diseases could be controlled by utilizing the substance without adversely affecting the environment.
[Patent Reference No. 1] Japanese Patent Application Laid-open No. 11-343209

### Disclosure of the Invention

### Problems to be Solved by the Invention

For controlling a plant disease occurring in a field by using titanium dioxide, it is required to suspend the substance in water or the like and spray the suspension onto the field. However, titanium dioxide is poorly dispersible in water. When suspended in water, titanium dioxide precipitates from the suspension within a short time. It is possible to maintain the suspended state of titanium dioxide in a suspension for a longer time by adding a dispersing agent or the like to the suspension. However, some of dispersing agents have adverse influence on the environment. Even though titanium dioxide itself is friendly to the environment, there is a possibility that the environment might be polluted with a dispersing agent added to a suspension of titanium dioxide. For these reasons, it has been demanded to develop a method for suspending a titanium dioxide powder in water for a long time without using any dispersing agent.

The present invention is made under these technical situations. Accordingly, the object of the present invention is to provide a means for allowing a titanium dioxide powder to be suspended in water for a long time.

### Means for Solving the Problems

In order to solve the problems mentioned above, the present inventors have made intensive and extensive studies. As a consequence, the inventors have found that the dispersibility of a titanium dioxide powder can be improved and the suspended state of the titanium dioxide powder in a suspension can be maintained for a long time by passing the titanium dioxide powder between discharge electrodes of a commercial ozone generator. Based on these findings, the present invention has been accomplished.

That is, the present invention provides the following items (1) to (5).
(1) A highly dispersible titanium dioxide powder produced by a discharge treatment of a titanium dioxide powder.
(2) A process for producing a highly dispersible titanium dioxide powder, comprising conducting a discharge treatment of a titanium dioxide powder.
(3) A titanium dioxide suspension comprising a highly dispersible titanium dioxide powder as recited in item (1) suspended in water.
(4) A plant disease control agent for agricultural or horticultural use, comprising a titanium dioxide suspension as recited in item (3).
(5) A pest insect control agent for agricultural or horticultural use, comprising a titanium dioxide suspension as recited in item (3).

### Effect of the Invention

The present invention provides a titanium dioxide powder having a high dispersibility. The titanium dioxide powder can maintain its suspended state in a suspension for a long time without the need of using any dispersing agent or the like, and therefore can be sprayed onto a field to control a plant disease or a pest insect without adversely affecting the environment.

### Brief Description of the Drawings

Fig. 1 is a photograph of an electrode unit of an ozone generator.
Fig. 2 is a photograph showing the states of titanium dioxide powder suspensions immediately after the experiment is started.
Fig. 3 is a photograph showing the states of titanium dioxide powder suspensions about two minutes after the experiment is started.
Fig. 4 is a photograph showing the states of titanium dioxide powder suspensions about thirty minutes after the experiment is started.
Fig. 5 is a photograph showing the states of titanium dioxide powder suspensions about twenty hours after the experiment is started.
Fig. 6 is a photograph showing the states of ceramics powder suspensions and calcium carbonate powder suspensions immediately after the experiment is started.
Fig. 7 is a photograph showing the states of ceramics powder suspensions and calcium carbonate powder suspensions about two minutes after the experiment is started.
Fig. 8 is a photograph showing the states of egg shell powder suspensions and calcined born powder suspensions immediately after the experiment is started.
Fig. 9 is a photograph showing the states of egg shell powder suspensions and calcined born powder suspensions two minutes after the experiment is started.

### Best Mode for Carrying Out the Invention

Hereinbelow, the present invention will be described in detail.

The highly dispersible titanium dioxide powder of the present invention is produced by a discharge treatment of a titanium dioxide powder. A titanium dioxide powder produced by any means other than a discharge treatment is also included within the scope of the highly dispersible titanium dioxide powder of the present invention, as long as it has the same properties as those of the highly dispersible titanium dioxide powder of the present invention.

The discharge treatment is not particularly limited, as long as it enables to produce a highly dispersible titanium dioxide powder. For example, a titanium dioxide powder is placed between opposed discharge electrodes so that an electron stream generated between the electrodes is allowed to collide with the titanium dioxide powder. An example of the discharge electrode is a silent discharge electrode which is used in an ozone generator or the like.

Titanium dioxide to be used in the present invention is preferably of anatase type. Rutile type titanium dioxide may also be used.

The highly dispersible titanium dioxide powder of the present invention can be suspended in water for a long time. The suspension can be used as a plant disease control agent for agricultural or horticultural use or a pest insect control agent for agricultural or horticultural use by spraying the suspension onto a field or the like.

The amount of titanium dioxide contained in the suspension to be sprayed is not particularly limited, as long as the amount lies within the range that enables to control a target plant disease or pest insect. In general, the amount is 0.01 to 0.5 g, preferably 0.03 to 0.1 g, per liter of the suspension.

The amount of the suspension to be sprayed onto a field is not also particularly limited, as long as the amount lies within the range that enables to control a target plant disease or pest insect. In general, the amount is 50 to 400 L, preferably 100 to 300 L, per 10 a.

Examples of the plant disease to be controlled include corynespora leaf spot disease, downy mildew disease, bacterial spot disease, gray mold disease, sclerotinia rot disease and powdery mildew disease of cucumber, leaf blight disease of Chinese chive, leaf blight disease, leaf spot disease and stem blight disease of asparagus, gray mold disease, sclerotinia rot disease and leaf mold disease of tomato, gray mold disease, anthracnose leaf blight disease, stem blight disease, zonate leaf spot disease and powdery mildew disease of strawberry, and downy mildew disease, bacterial spot disease and gray mold disease of melon. However, the plant disease is not limited to these examples.

Examples of the pest insect to be controlled include mealy plum aphid, silverleaf whitefly, mite and slips. However, the pest insect is not limited to these examples.

The method for spraying the suspension is not particularly limited, and the suspension can be sprayed in the same manner as for conventional agrichemicals. For controlling a pest insect which parasitizes the underside of a leaf, such as silverleaf whitefly, it is preferred to use an electrostatic atomizer.

### Examples

Hereinafter, the present invention will be described in great detail with reference to the following examples.

### [Example 1] Production of highly dispersible titanium dioxide powder and confirmation of dispersibility thereof

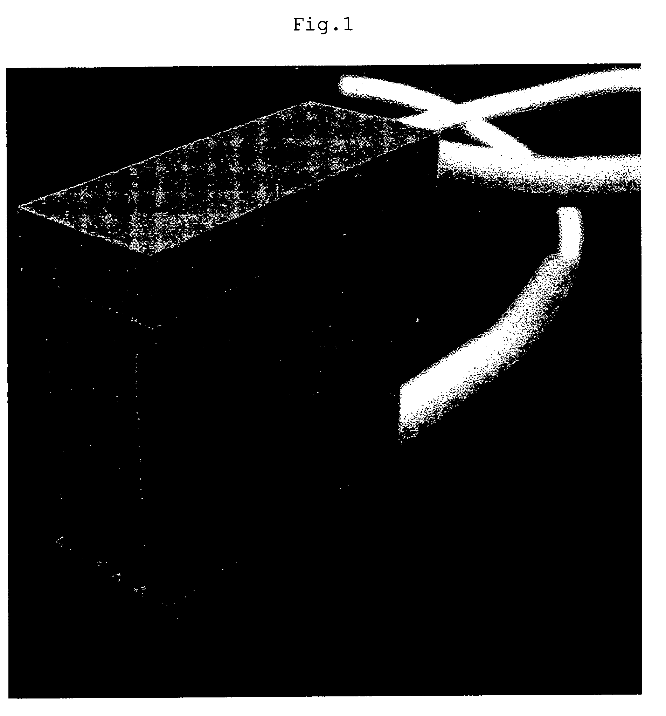

The main body cover of a commercial ozone generator (manufactured by Silver Seiko Ltd., Japan; ZN3000 type) was removed from the apparatus to expose an electrode unit on the inside. The electrode unit of the apparatus had a shelf-like structure having four void parts (Fig. 1).

A commercial titanium dioxide powder (distributed by Shiraishi Calcium Kaisha Ltd., Japan) was charged in the void parts of the electrode unit while leaving the power of the ozone generator on, and was allowed to pass through the void parts. The titanium dioxide powder (6 g) produced by passing through the void parts was suspended in a purified water for industrial use (100 ml) to prepare a suspension. The suspension was diluted 1,000-fold with a purified water for industrial use to prepare a diluted suspension. These suspensions were allowed to stand, and observed on whether precipitation occurred or not. For comparison purposes, a suspension of the titanium dioxide powder that was not subj ected to the discharge treatment was also observed in the same manner.

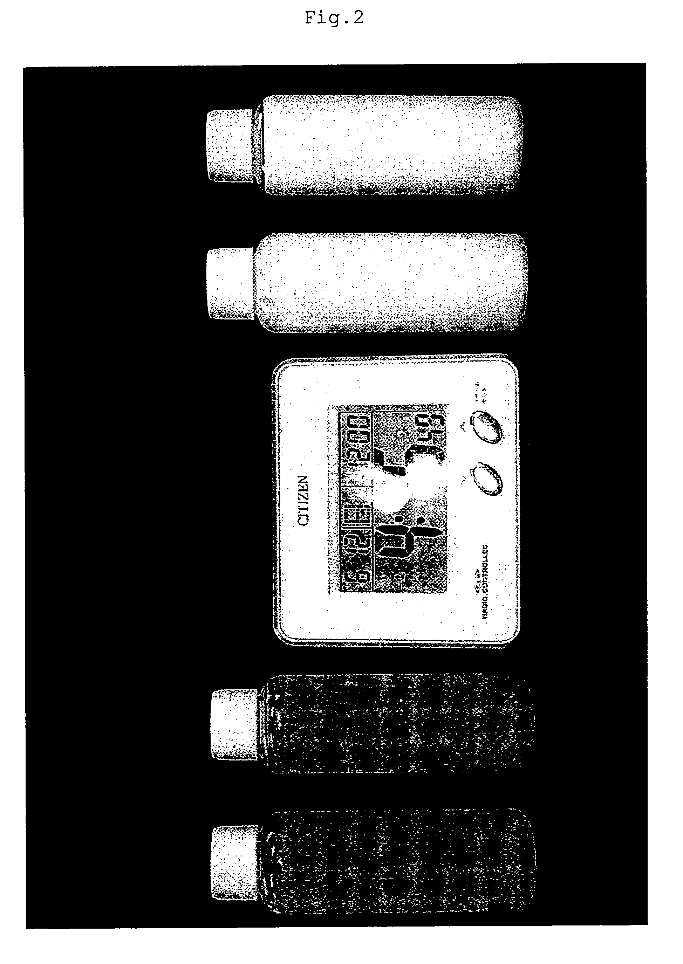

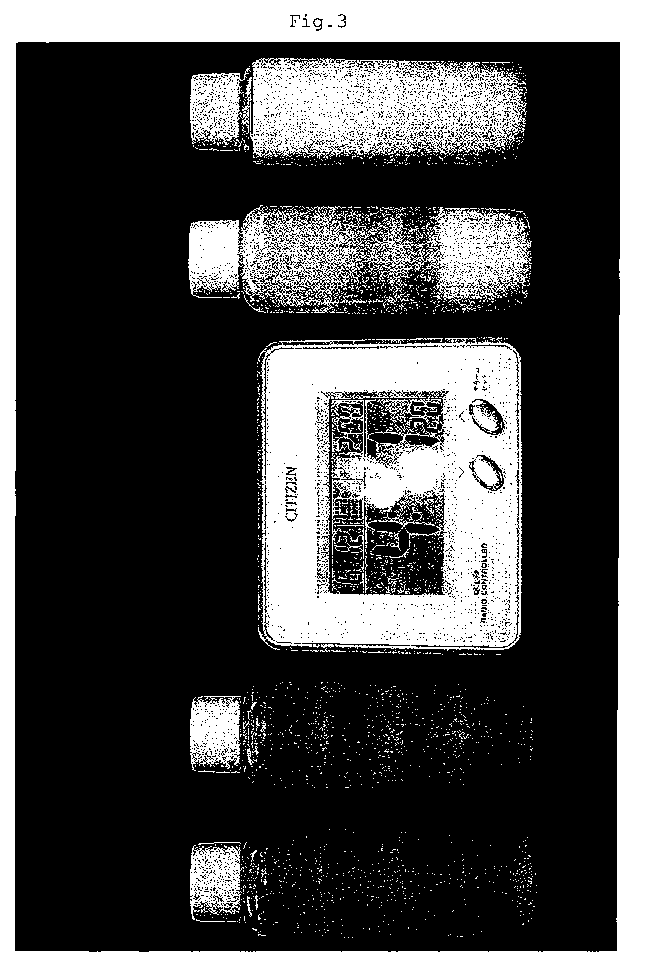

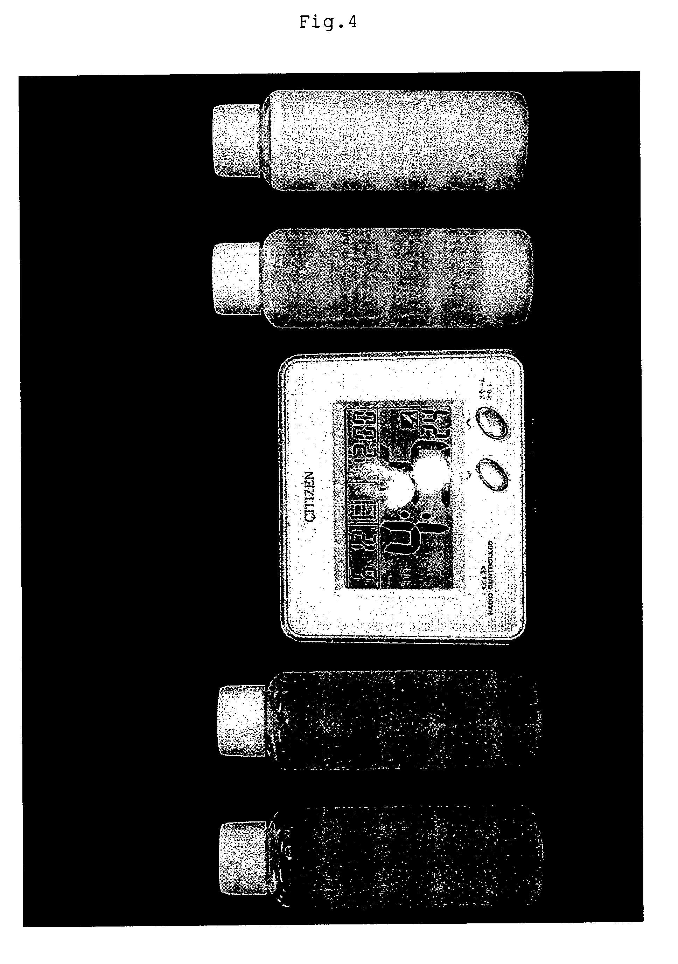

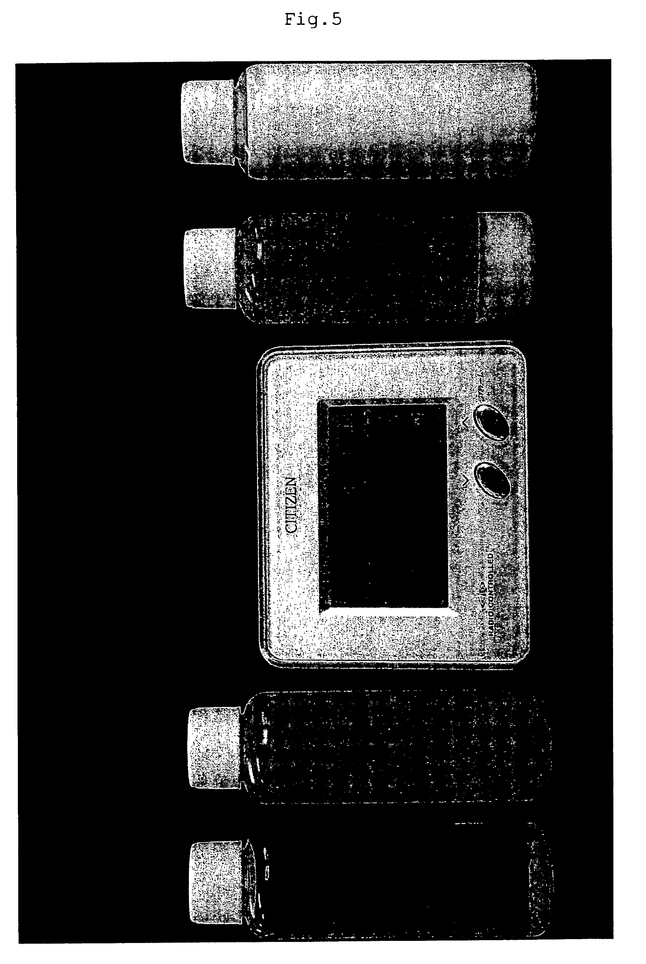

The states of the suspensions immediately after, about two minutes after, about thirty minutes after, and about twenty hours after the experiment was started are shown in Figs. 2, 3, 4 and 5, respectively. The four bottles shown in each figure are as follows (from left to right) : a 1, 000-fold dilution of a suspension of a discharge-untreated titanium dioxide powder; a 1,000-fold dilution of a suspension of a discharge-treated titanium dioxide powder; a suspension of a discharge-untreated titanium dioxide powder; and a suspension of a discharge-treated titanium dioxide powder. In this experiment, since the discharge-untreated titanium dioxide powder was not suspended in a purified water for industrial use merely by adding the powder to the purified water, the bottles were shaken vigorously to suspend the mixture forcibly.

With respect to the discharge-untreated titanium dioxide powder, precipitation was already observed at the time point when two minutes elapsed after the experiment was started, and each of the suspensions was almost completely separated into precipitates and a supernatant twenty hours after the experiment was started. With respect to the discharge-treated titanium dioxide powder, in contrast, the suspended state was maintained twenty hours after the experiment was started. These results demonstrate that the dispersibility of a titanium dioxide powder can be improved by applying the discharge treatment to the titanium dioxide powder.

### [Comparative Example 1] Confirmation of dispersibility of ceramics powder and calcium carbonate powder

The discharge treatment and the observation of suspensions were conducted in the same manner as in Example 1, except that each of a ceramics powder (a sample was provided by Saga Ceramics Research Laboratory, Japan) and a calcium carbonate powder (distributed by Shiraishi Calcium Kaisha Ltd., Japan) was used in place of the titanium dioxide powder.

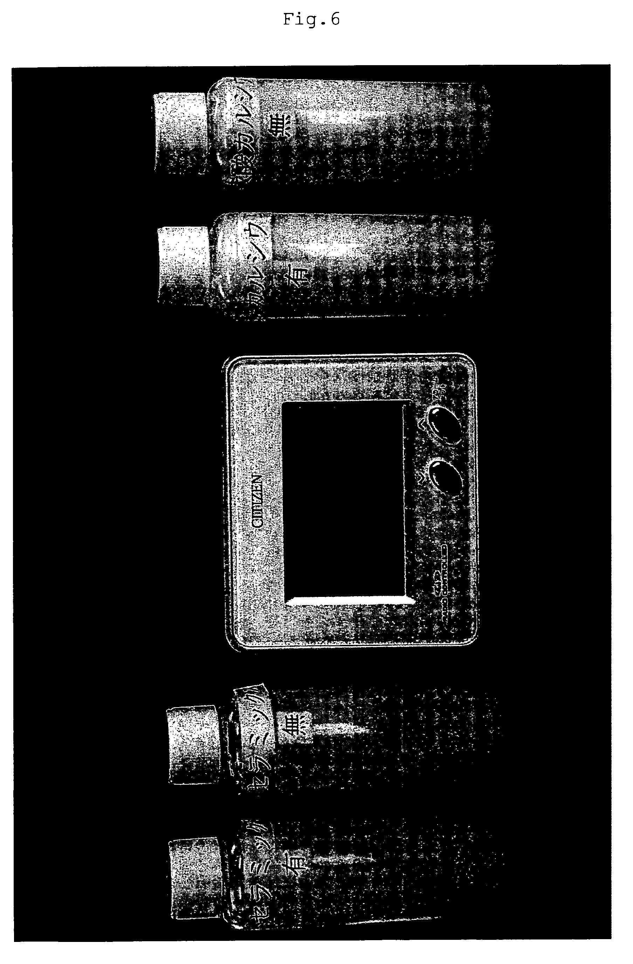

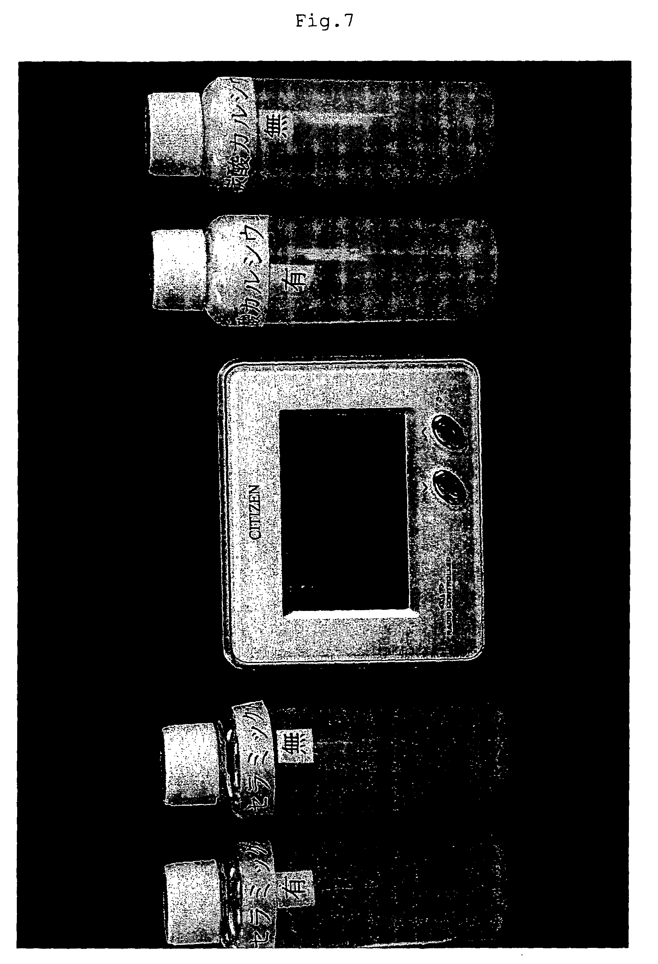

The states of the suspensions observed immediately after and about two minutes after the experiment was started are shown in Figs. 6 and 7, respectively. The four bottles shown in each figure are as follows (from left to right): a suspension of a discharge-treated ceramic powder; a suspension of a discharge-untreated ceramic powder; a suspension of a discharge-treated calcium carbonate powder; and a suspension of a discharge-untreated calcium carbonate powder. In this experiment, since the ceramic powder and the calcium carbonate powder were not suspended in a purified water for industrial use merely by adding these powders to the purified water, these powders were suspended in the purified water forcibly by shaking or agitation for the purpose of determining their precipitation rates.

Regardless of whether the discharge treatment was applied or not, the ceramic powder and the calcium carbonate powder began to precipitate two minutes after the experiment was started, and any improvement in dispersibility by the discharge treatment was not observed.

### [Comparative Example 2] Confirmation of dispersibility of egg shell powder and calcined bone powder

The discharge treatment and the observation of suspensions were conducted in the same manner as in Example 1, except that each of an egg shell powder (distributed by Greentechno 21, Japan) and a calcined bone powder (distributed by Exela, Japan) was used in place of the titanium dioxide powder.

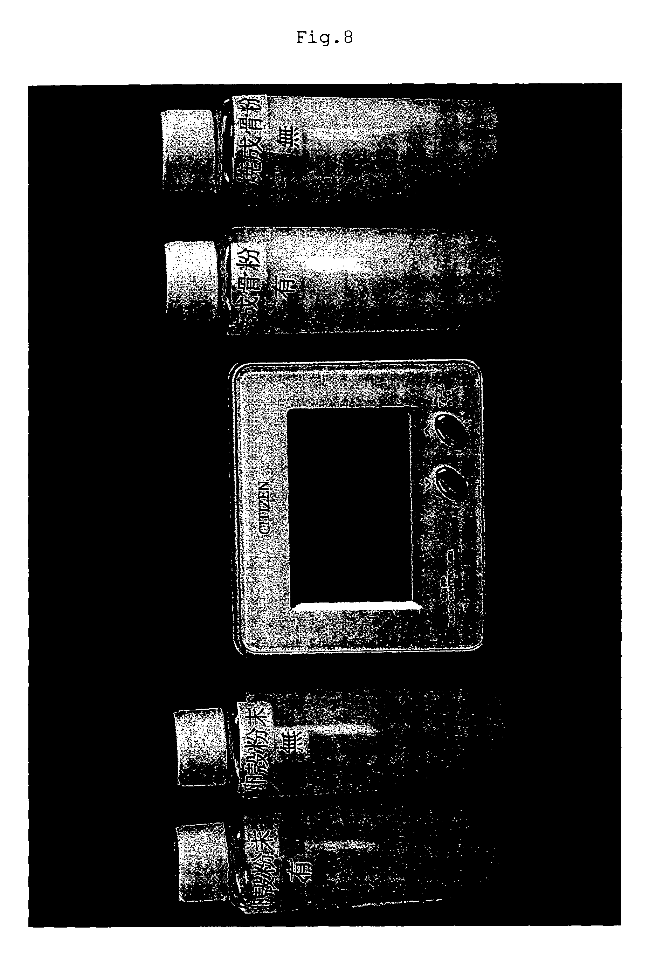

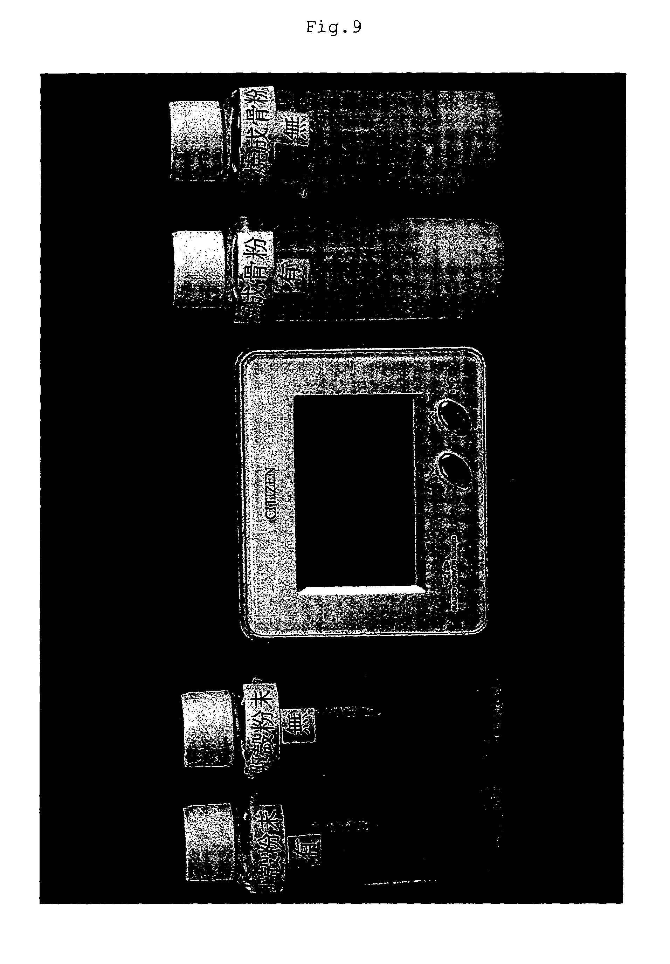

The states of the suspensions observed immediately after and about two minutes after the experiment was started are shown in Figs. 8 and 9, respectively. The four bottles shown in each figure are as follows (from left to right): a suspension of a discharge-treated egg shell powder; a suspension of a discharge-untreated egg shell powder; a suspension of a discharge-treated calcined bone powder; and a suspension of a discharge-untreated calcined bone powder. In this experiment, since the egg shell powder and the calcined bone powder were not suspended in a purified water for industrial use merely by adding these powders to the purified water, these powders were suspended in the purified water forcibly by shaking or agitation for the purpose of determining their precipitation rates.

Regardless of whether the discharge treatment was applied or not, the egg shell powder and the calcined bone powder began to precipitate two minutes after the experiment was started, and any improvement in dispersibility by the discharge treatment was not observed.

These results show that the above-mentioned discharge treatment can improve the dispersibility only of a titanium dioxide powder, but cannot improve the dispersibility of other powdery substances. It is assumed that titanium dioxide has a photocatalytic property not available in other powdery substances and this property is involved in the dispersibility-improving effect of the discharge treatment.

### [Test Example 1] Test on cucumber corynespora leaf spot disease infection prevention effect

A titanium dioxide suspension was sprayed onto a cucumber field where corynespora leaf spot disease had been developed (date of spraying: 18 December, 2003), and the preventive effect of the titanium dioxide suspension on corynespora leaf spot disease infection was examined.

The titanium dioxide suspension was prepared as follows. A highly dispersible titanium dioxide powder (12 g) produced by the method mentioned in Example 1 was added to a purified water for industrial use (200 ml). Mix Power (registered trademark; manufactured by Syngenta Japan K.K., Japan) (100 cc) was further added to the mixture as a spreading agent, and the resulting mixture was diluted 1000-fold with tap water, thereby producing the titanium dioxide suspension. The titanium dioxide suspension was sprayed in an amount of 200 L per 10 a of the field.

For comparison purposes, the spraying was conducted in the same manner as mentioned above, except that tap water was used in place of the titanium dioxide suspension.

The rate of corynespora leaf spot disease incidence (an infection rate on young leaves determined after the spraying, expressed by %) in an area where the titanium dioxide suspension was sprayed (test area) and that in an area where tap water was sprayed (control area) are shown in Table 1.

**[Table 1]**

| | Before spraying | 5 Days after spraying | 10 Days after spraying | 15 Days after spraying | 20 Days after spraying |
|---|---|---|---|---|---|
| Test area | 70% | 5% | 5% | 5% | 10% |
| Control area | 70% | 70% | 80% | 85% | 85% |

As shown in Table 1, the corynespora leaf spot disease infection still continued to spread after spraying in the control area, while the rate of corynespora leaf spot disease incidence was rapidly decreased after spraying and kept at a low level thereafter in the test area. These results demonstrate that the titanium dioxide suspension has a preventive effect on cucumber corynespora leaf spot disease infection.

### [Test Example 2] Test on asparagus stem blight disease prevention effect

A titanium dioxide suspension was sprayed onto the soil surface of an asparagus field which had experienced the occurrence of stem blight disease in the past (date of spraying: 20 January, 2004), and the preventive effect of the titanium dioxide suspension on stem blight disease was examined.

The titanium dioxide suspension was prepared in the same manner as in Test Example 1. The titanium dioxide suspension was sprayed in an amount of 200 L per 10 a of the field. As in Test example 1, the spraying was also conducted using tap water in place of the titanium dioxide suspension, and comparison was made on the effect between the two cases.

The number of occurrence of stem blight disease (the number of asparagus plants which developed stem blight disease per 5 a of the field) in an area where the titanium dioxide suspension was sprayed (test area) and that in an area where tap water was sprayed (control area) are shown in Table 2.

**[Table 2]**

| | Before spraying | 2 Months after spraying | 3 Months after spraying | 4 months after spraying | 5 Months after spraying |
|---|---|---|---|---|---|
| Test area | 0 | 0 | 0 | 3 | 7 |
| Control area | 0 | 2 | 30 | 50 | 85 |

As shown in Table 2, the number of asparagus plants which developed stem blight disease was rapidly increased in the control area, while almost no asparagus plant developed stem blight disease in the test area. These results demonstrate that the titanium dioxide suspension has a preventive effect on asparagus stem blight disease.

### [Test Example 3] Test on tomato gray mold disease prevention effect

A titanium dioxide suspension was sprayed onto a tomato field which had experienced the occurrence of gray mold disease in the past (date of spraying: 10 February, 2005), and the preventive effect of the titanium dioxide suspension on gray mold disease was examined.

The titanium dioxide suspension was prepared in the same manner as in Test Example 1. The titanium dioxide suspension was sprayed in an amount of 200 L per 10 a of the field. As in Test example 1, the spraying was also conducted using tap water in place of the titanium dioxide suspension, and comparison was made on the effect between the two cases.

The number of occurrence of gray mold disease (the number of tomato fruits which developed gray mold disease per 5 a of the field) in an area where the titanium dioxide suspension was sprayed (test area) and that in an area where tap water was sprayed (control area) are shown in Table 3.

**[Table 3]**

| | Before spraying | 15 Days after spraying | 19 Days after spraying | 24 Days after spraying | 29 Days after spraying |
|---|---|---|---|---|---|
| Test area | 0 | 0 | 1 | 1 | 3 |
| Control area | 0 | 0 | 6 | 15 | 27 |

As shown in Table 3, the number of tomato fruits which developed gray mold disease was rapidly increased in the control area, while almost no tomato fruit developed gray mold disease in the test area. These results demonstrate that the titanium dioxide suspension has a preventive effect on tomato gray mold disease.

### [Test Example 4] Test on strawberry anthracnose leaf blight disease infection prevention effect

A titanium dioxide suspension was sprayed onto a strawberry field where anthracnose leaf blight disease occurred (date of spraying: 5 August, 2004), and the preventive effect of the titanium dioxide suspension on anthracnose leaf blight disease infection was examined.

The titanium dioxide suspension was prepared in the same manner as in Test Example 1. The titanium dioxide suspension was sprayed in an amount of 100 L per 10 a of the field. As in Test example 1, the spraying was also conducted using tap water in place of the titanium dioxide suspension, and comparison was made on the effect between the two cases.

The rate of anthracnose leaf blight disease incidence (the percentage of strawberry plants whose young leaves were infected with anthracnose leaf blight disease relative to the total number of strawberry plants) in an area where the titanium dioxide suspension was sprayed (test area) and that in an area where tap water was sprayed (control area) are shown in Table 4.

**[Table 4]**

| | Before spraying | 5 Days after spraying | 10 Days after spraying | 15 Days after spraying | 20 Days after spraying |
|---|---|---|---|---|---|
| Test area | 60% | 10% | 15% | 15% | 15% |
| Control area | 60% | 60% | 65% | 70% | 70% |

As shown in Table 4, the anthracnose leaf blight disease infection still continued to spread after spraying in the control area, while the rate of anthracnose leaf blight disease incidence was rapidly decreased after spraying and kept at a low level thereafter in the test area. These results demonstrate that the titanium dioxide suspension has a preventive effect on strawberry anthracnose leaf blight disease infection.

### [Test Example 5] Test on mealy plum aphid control effect

A titanium dioxide suspension was sprayed onto mealy plum aphids which parasitized weeds (date of spraying: 19 April, 2005), and the controlling effect of the titanium dioxide suspension on mealy plum aphids was examined.

The titanium dioxide suspension was prepared in the same manner as in Test Example 1. The titanium dioxide suspension was sprayed in an amount of 150 L per 10 a of the field. As in Test example 1, the spraying was also conducted using tap water in place of the titanium dioxide suspension, and comparison was made on the effect between the two cases.

The number of surviving mealy plum aphids in an area where the titanium dioxide suspension was sprayed (test area) and that in an area where tap water was sprayed (control area) are shown in Table 5.

**[Table 5]**

| | Before spraying | 10 Min. after spraying | 15 Min. after spraying | 20 Min. after spraying | 25 Min. after spraying |
|---|---|---|---|---|---|
| Test area | 20 | 3 | 2 | 2 | 2 |
| Control area | 20 | 20 | 20 | 20 | 20 |

As shown in Table 5, no change in the number of surviving mealy plum aphids was observed after spraying in the control area, while most of the mealy plum aphids were dead within 10 minutes after the spraying in the test area. These results demonstrate that the titanium dioxide suspension has an effect of controlling mealy plum aphids.

### [Test Example 6] Test on silverleaf whitefly control effect

A titanium dioxide suspension was sprayed onto silverleaf whiteflies which parasitized the underside of an eggplant leaf (date of spraying: 16 May, 2004), and the controlling effect of the titanium dioxide suspension on silverleaf whiteflies was examined.

The titanium dioxide suspension used for the spraying was prepared as follows. A highly dispersible titanium dioxide powder produced by the method mentioned in Example 1 was added to a purified water for industrial use to prepare an about 6 wt% suspension. The suspension (150 ml), Mix Power (registered trademark) (50 cc) and Mospilan (registered trademark; manufactured by Nippon Soda Co., Ltd., Japan) (100 g) were added to tap water, thereby producing the titanium dioxide suspension. The suspension was charged in a tank specialized for an atomizer and diluted by adding tap water thereto so that the total volume became 10 L. The spraying was conducted using a commercial electrostatic atomizer (manufactured by Matrix Japan Co., Ltd, Japan; BP-2.5 model). The suspension was sprayed in an amount of 5 L per 10 a of the field.

As in Test example 1, the spraying was also conducted using tap water in place of the titanium dioxide suspension, and comparison was made on the effect between the two cases.

The number of surviving silverleaf whiteflies in an area where the titanium dioxide suspension was sprayed (test area) and that in an area where tap water was sprayed (control area) are shown in Table 6.

**[Table 6]**

| | Before spraying | 10 Min. after spraying | 15 Min. after spraying | 20 Min. after spraying | 25 Min. after spraying |
|---|---|---|---|---|---|
| Test area | 26 | 6 | 5 | 5 | 5 |
| Control area | 25 | 25 | 25 | 25 | 25 |

As shown in Table 6, no change in the number of surviving silverleaf whiteflies was observed after spraying in the control area, while most of the silverleaf whiteflies were dead within 10 minutes after the spraying in the test area. These results demonstrate that the titanium dioxide suspension has an effect of controlling silverleaf whiteflies.

### [Test Example 7] Test on mite control effect

A titanium dioxide suspension was sprayed onto mites which parasitized the underside of a strawberry leaf (date of spraying: 25 April, 2004), and the controlling effect of the titanium dioxide suspension on mites was examined.

The titanium dioxide suspension used for the spraying was prepared as follows. A highly dispersible titanium dioxide powder produced by the method mentioned in Example 1 was added to a purified water for industrial use to prepare an about 6 wt% suspension. The suspension (150 ml) and Mix Power (registered trademark) (50 cc) were added to tap water, thereby producing the titanium dioxide suspension. The suspension was charged in a tank specialized for an atomizer and diluted by adding tap water thereto so that the total volume became 10 L. The spraying was conducted using a commercial electrostatic atomizer (manufactured by Matrix Japan Co., Ltd, Japan; BP-2.5 model). The suspension was sprayed in an amount of 5 L per 10 a of the field.

As in Test example 1, the spraying was also conducted using tap water in place of the titanium dioxide suspension, and comparison was made on the effect between the two cases.

The number of surviving mites in an area where the titanium dioxide suspension was sprayed (test area) and that in an area where tap water was sprayed (control area) are shown in Table 7.

**[Table 7]**

| | Before spraying | 10 Min. after spraying | 15 Min. after spraying | 20 Min. after spraying | 25 Min. after spraying |
|---|---|---|---|---|---|
| Test area | 25 | 6 | 3 | 3 | 3 |
| Control area | 28 | 28 | 28 | 28 | 28 |

As shown in Table 7, no change in the number of surviving mites was observed after spraying in the control area, while most of the mites were dead within 10 minutes after the spraying in the test area. These results demonstrate that the titanium dioxide suspension has an effect of controlling mites.

The specification includes the contents as described in the specification and/or drawings of Japanese Patent Application No. 2005-211486, which is a priority document of the present application. All publications, patents and patent applications cited herein are incorporated herein by reference in their entirety.

## Claims

1. A highly dispersible titanium dioxide powder produced by a discharge treatment of a titanium dioxide powder.

2. A process for producing a highly dispersible titanium dioxide powder, comprising conducting a discharge treatment of a titanium dioxide powder.

3. A titanium dioxide suspension comprising a highly dispersible titanium dioxide powder as recited in claim 1 suspended in water.

4. A plant disease control agent for agricultural or horticultural use, comprising a titanium dioxide suspension as recited in claim 3.

5. A pest insect control agent for agricultural or horticultural use, comprising a titanium dioxide suspension as recited in claim 3.
